# EUROPÄISCHE PATENTSCHRIFT

(11) **EP 2 802 233 B1**
(45) Veröffentlichungstag und Bekanntmachung des Hinweises auf die Patenterteilung: **20.01.2016**
(21) Anmeldenummer: 12794197.9
(22) Anmeldetag: 21.11.2012
(51) Int. Cl.: A44B 18/00, B29C 43/22, B29C 33/00

(54) **VERFAHREN ZUM HERSTELLEN EINES KUNSTSTOFFERZEUGNISSES NEBST VORRICHTUNG ZUM DURCHFÜHREN DES VERFAHRENS**
METHOD FOR PRODUCING A PLASTICS PRODUCT AND DEVICE FOR CARRYING OUT THE METHOD
PROCEDE DE FABRICATION D'UN PRODUIT EN MATIERE PLASTIQUE, DISPOSITIF PERMETTANT LA MISE EN UVRE DUDIT PROCEDE

(30) Priorität: 12.01.2012 DE 102012000374
(43) Veröffentlichungstag der Anmeldung: 19.11.2014
(73) Patentinhaber: Gottlieb Binder Gmbh & Co. Kg, 71084 Holzgerlingen (DE)
(72) Erfinder: TUMA, Jan, 71083 Herrenberg (DE)
(74) Vertreter: Bartels, Martin Erich Arthur
(86) Internationale Anmeldenummer: PCT/EP2012/004823
(87) Internationale Veröffentlichungsnummer: WO 2013/104383

(56) Entgegenhaltungen:
- WO-A1-02/39842
- WO-A1-2005/087033
- DE-A1- 19 646 318
- DE-A1-102009 050 586
- DE-C1- 19 828 856
- US-B1- 6 258 311

## Beschreibung

Die Erfindung betrifft ein Verfahren zum Herstellen eines Kunststofferzeugnisses mit den Merkmalen im Oberbegriff von Anspruch 1. Die Erfindung betrifft weiter eine Vorrichtung zum Durchführen des Verfahrens mit den Merkmalen im Oberbegriff von Anspruch 7.

Durch die DE 196 46 318 A1 ist ein Verfahren zur Herstellung eines Verschlussproduktes mit einer Vielzahl von einstückig mit einem Träger ausgebildeten Verhakungsmitteln in Form von Verdickungen aufweisenden Stielteilen bekannt, bei dem ein thermoplastischer Kunststoff in plastischem oder flüssigem Zustand dem Spalt zwischen einer Druckwalze und einer Formwalze zugeführt wird, wobei die Formwalze mit nach außen und innen offenen Hohlräumen versehen ist, und beide Walzen in entgegengesetztem Drehsinn angetrieben werden, so dass der Träger im Spalt zwischen den Walzen gebildet wird. Das bekannte Verfahren, das seiner Gattung nach auch den sogenannten Chill-Roll-Verfahren zugeordnet wird, ist dadurch charakterisiert, dass die Formwalze ein Sieb aufweist, dessen Hohlräume durch Ätzen oder mittels eines Lasers hergestellt worden sind, wobei die fertigen pilzartigen Verhakungsmittel allein dadurch entstehen, dass der thermoplastische Kunststoff in den offenen Hohlräumen des Siebes der Formwalze zumindest teilweise erhärtet. Hiermit ist im Stand der Technik ein kostengünstiges Herstellverfahren zur Herstellung von Verschlussteilen aus thermoplastischem Kunststoff geschaffen nebst zugehöriger Herstellvorrichtung, wobei die dahingehenden pilzartigen Verhakungsmittel zur Bildung eines immer wieder sich öffnenden und schließenden Verschlusses in lösbarem Eingriff bringbar sind mit Schlaufenteilen und/oder sonst korrespondierenden Verhakungsmitteln eines weiteren Verschlussteiles. Die dahingehenden Verschluss-Systeme sind weltweit auch unter der Markenbezeichnung Kletten^{®} oder Kletten^{®}-Haftverschluss zumindest der Fachwelt bekannt.

Durch die DE 10 2004 012 067 A1 ist ein Verfahren nunmehr zum Herstellen von Haftelementen auf einem Träger mittels Einsatz mindestens eines Kunststoffmaterials bekannt, das in mindestens ein Formgebungselement eingebracht wird. Dadurch entstehen mit dem bekannten Verfahren Haftelemente mit sich an den Stielen verbreiternden Enden als Kopfteile, deren Anhaftung überwiegend mittels Van-der-Waals-Kräften erfolgt. Bei dem bekannten Verfahren ist das jeweils verwendete Kunststoffmaterial vorzugsweise thixotrop und weist eine mit einem Rotationsviskosimeter gemessene Viskosität von 7.000 bis 15.000 mPas auf. Ferner wird als jeweiliges Formgebungselement wiederum ein trommel- oder bandförmiges Sieb eingesetzt, wobei diesmal jedoch dieses mit mindestens 10.000, vorzugsweise mit 16.000, Formhohlräumen pro cm² und mehr versehen ist.

Van-der-Waals-Kräfte sind sogenannte zwischenmolekulare Kräfte, die als schwache Bindungskräfte zwischen inerten Atomen und gesättigten Molekülen auftreten. Während bei der Wechselwirkung zwischen Atomen lediglich die sogenannten Dispersionskräfte zum Tragen kommen, sind bei Molekülen die Wechselwirkungen induzierter bzw. eventuell vorhandener permanenter Dipolmomente (Orientierungseffekt) als zusätzliche Anziehungskräfte wirksam. Es sei darauf hingewiesen, dass zwar von manchen Autoren die Van-der-Waals-Kräfte als Synonym zu zwischenmolekularen Kräften angesprochen werden, dass aber mehrheitlich unter Van-der-Waals-Kräften auch solche sehr weitreichende Anziehungskräfte zwischen neutralen Molekülen verstanden werden.

Mit der bekannten Verfahrens- sowie Vorrichtungs- und Produktlösung sind Anhaftungssysteme realisierbar, bei denen das Haftprodukt sich an beliebigen Oberflächen festlegen lässt. Neben befestigungstechnischen Möglichkeiten jedweder Art wurden auch in der jüngsten Vergangenheit mit dem Haftprodukt neue Applikationen in der Medizintechnik erschlossen, beispielsweise zur Wund- und Brandversorgung.

Die WO 2005/087033 A1, die DE 198 28 856 C1, die DE 10 2009 050 586 A1, die DE 196 46 318 A1 und die WO 02/39842 A1 der Schutzrechtsinhaberin offenbaren jeweils ein Verfahren zum Herstellen eines Kunststofferzeugnisses bestehend aus einem Träger mit vorstehenden Stielteilen, die an ihrem freien Ende ein sich gegenüber dem jeweiligen Stielteil im Durchmesser verbreiterndes Kopfteil aufweisen, wobei die Stielteile und die Kopfteile in Kavitäten eines Formsiebes und auf ihren dem Träger abgewandten Seiten in einer Formgebungszone des Formsiebes gebildet werden, wobei die Formgebungszone mittels einer Gegenfläche gegenüber der Umgebung derart abgedichtet wird, dass eine vorgegebene Luftmenge in der Formgebungszone eingeschlossen einen Gegendruck auf das in die jeweilige Kavität der Formgebungszone eingebrachte Kunststoffmaterial zur Unterstützung der Formgebung ausübt, und wobei die Abdichtung der Formgebungszone mittels der Oberflächengestaltung der einander zugewandten Oberflächen von Formsieb und/oder Gegenfläche erreicht wird.

Ein weiteres Herstellverfahren zur Erzeugung von Haftverschlussteilen geht aus der US 6 258 311 B1 hervor.

Bei diesen bekannten Lösungen ist das Einformen des Kunststoffmaterials in die Formausnehmungen des Formsiebes entsprechend langsam durchzuführen, um eine möglichst formstabile Ausbildung des regelmäßig pilzartigen Verschlusskopfes als jeweiliges Kopfteil zu erhalten, mit der Maßgabe, dass dieser sich nach angemessener Aushärtzeit noch gut aus dem Sieb für das Fertigstellen des Verschlussprodukts oder des Haftprodukts ausformen lässt.

Demgemäß ist Ziel der vorliegenden Erfindung, ein Verfahren nebst Vorrichtung zur Verfügung zu stellen, das nicht nur eine gleichmäßige Ausformung der Kopf- und Stielteile aus dem Formsieb erlaubt, sondern auch eine deutlich schnellere Ausformung, so dass dergestalt wesentlich höhere Produktionsgeschwindigkeiten möglich sind, was wiederum die Herstellkosten senken hilft.

Eine dahingehende Aufgabe ist mit einem Verfahren gemäß der Merkmalsausgestaltung des Patentanspruchs 1 in seiner Gesamtheit gelöst.

Gemäß dem Kennzeichen von Anspruch 1 ist vorgesehen, dass zumindest eine der beiden-Oberflächen mit einer Rauigkeit Rz von 0,02 bis 2,5 µm versehen wird.

Dadurch, dass die Formgebungszone mittels einer Gegenfläche gegenüber der Umgebung derart abgedichtet wird, dass eine vorgebbare Luftmenge in der Formgebungszone eingeschlossen einen Gegendruck auf das in die jeweilige Kavität der Formgebungszone eingebrachte Kunststoffmaterial zur Unterstützung der Formgebung ausübt, ist das Eindringen der Kunststoffschmelze in die jeweilige Formkavität durch die eingeschlossene Luftmenge erschwert, so dass neben einer Verdichtung der Schmelze sich eine verbesserte Orientierung des Kunststoffmaterials innerhalb der Formgebungszone ergibt. Dies hat zur Folge, dass sich insbesondere die zu formenden Kopfteile entlang der Formgebungswände der jeweiligen Kavität innerhalb der Formgebungszone orientieren und dort auch beschleunigt aushärten, so dass wesentlich schneller der Entformungsprozess vonstattengehen kann, was die Herstellkosten für das zu erzeugende Verschluss- oder Haftprodukt reduzieren hilft.

Durch die in der jeweiligen Kavität eingeschlossene Luftmenge zwischen der genannten Gegenfläche und der Formgebungszone mit der eingebrachten Kunststoffschmelze wird durch die derart eingeschlossene Luft ein zusätzlicher Formgebungsdruck auf die Oberseite des jeweiligen Kopfteils gebracht, so dass es zu einem erhöhten Anpressdruck zwischen den randseitigen Flanken des Kopfteiles und der benachbart angeordneten, umlaufenden Formwand der Kavität kommt. Durch diese verstärkte Anpressung wird neben der gerichteten Orientierung für das jeweilige Verschluss- oder Haft-Kopfteil, was zu verbesserten Festigkeitswerten führt, der Aushärtvorgang beschleunigt, was die schnelleren Ausformzeiten bedingt.

Die genannte Aufgabe wird ferner mit einer Vorrichtung zum Durchführen des vorgenannten Verfahrens gelöst, wobei die genannte Formgebungszone des Formsiebes mittels der Gegenfläche gegenüber der Umgebung derart abgedichtet ist, dass eine vorgebbare Luftmenge in der Formgebungszone eingeschlossen einen Gegendruck auf das die jeweilige Kavität der Formgebungszone eingebrachte Kunststoffmaterial zur Unterstützung der Formgebung ausübt, und wobei die Abdichtung der Formgebungszone mittels der Oberflächengestaltung der einander zugewandten Oberflächen von Formsieb und/oder Gegenfläche erreicht ist. Erfindungsgemäß ist vorgesehen, dass zumindest eine der beiden Oberflächen mit Rauigkeit Rz von 0,02 bis 1 µm versehen ist.

Das hiermit erhaltene Verschluss- oder Haftprodukt ist spezifisch dadurch charakterisiert, dass die Höhe des Produktes zwischen der Unterseite des Trägers und der Oberseite des Trägers derart minimiert ist, vorzugsweise 40 bis 120 µm, besonders bevorzugt 70 bis 110 µm beträgt, dass zumindest in Teilbereichen, insbesondere in Längsausrichtung des Trägers das Produkt elastische Eigenschaften aufweist. Insgesamt lassen sich gegenüber dem Stand der Technik mit dem erfindungsgemäßen Verfahren nebst Vorrichtung Verschluss- oder Haftprodukte erhalten, die neben höheren Schälfestigkeitswerten auch von der Materialstärke her deutlich dünner ausgebildet werden können, was zu weichen und flexiblen Verschluss- oder Haftprodukten führt. Die dahingehenden Produkte, die weicher und flexibler in der Anmutung sind, lassen sich dann sehr gut innerhalb von Hygieneprodukten verarbeiten, wie Babywindeln und dergleichen mehr, wo es auf eine gute Verträglichkeit und ein Zusammenwirken mit der menschlichen Haut ankommt.

Weitere vorteilhafte Ausführungsbeispiele der erfindungsgemäßen Lösung sind Gegenstand der Unteransprüche.

Im Folgenden wird das erfindungsgemäße Verfahren anhand zweier Vorrichtungen zum Durchführen des Verfahrens nebst dem erhaltenen Verschluss- oder Haftprodukt näher erläutert. Dabei zeigen in prinzipieller und nicht maßstäblicher Darstellung:
- Fig. 1: in der Art eines Längsschnittes eine erste Ausführungsform der erfindungsgemäßen Vorrichtung;
- Fig. 2: eine vergrößerte Längsschnittdarstellung eines in Fig. 1 mit X angegebenen Bildausschnitts;
- Fig. 3: vergleichbar zu der Fig. 1 ein weiteres Ausführungsbeispiel für eine erfindungsgemäße Herstellvorrichtung;
- Fig. 4: vergleichbar zu den Fig. 1 und 3 ein weiteres Ausführungsbeispiel für eine erfindungsgemäße Herstellvorrichtung; und
- Fig. 5: in der Art einer perspektivischen Ausschnittsdarstellung ein Verschluss- oder Haftprodukt, herstellbar mit einer Vorrichtung gemäß den Fig. 1 bis 4 sowie dem nachfolgend beschriebenen Verfahren.

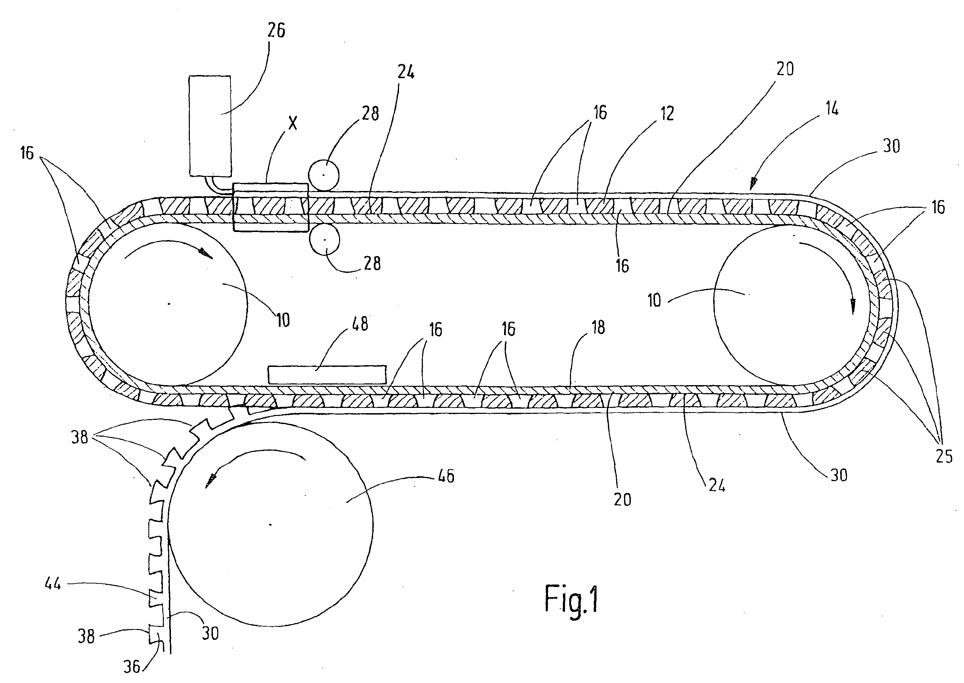

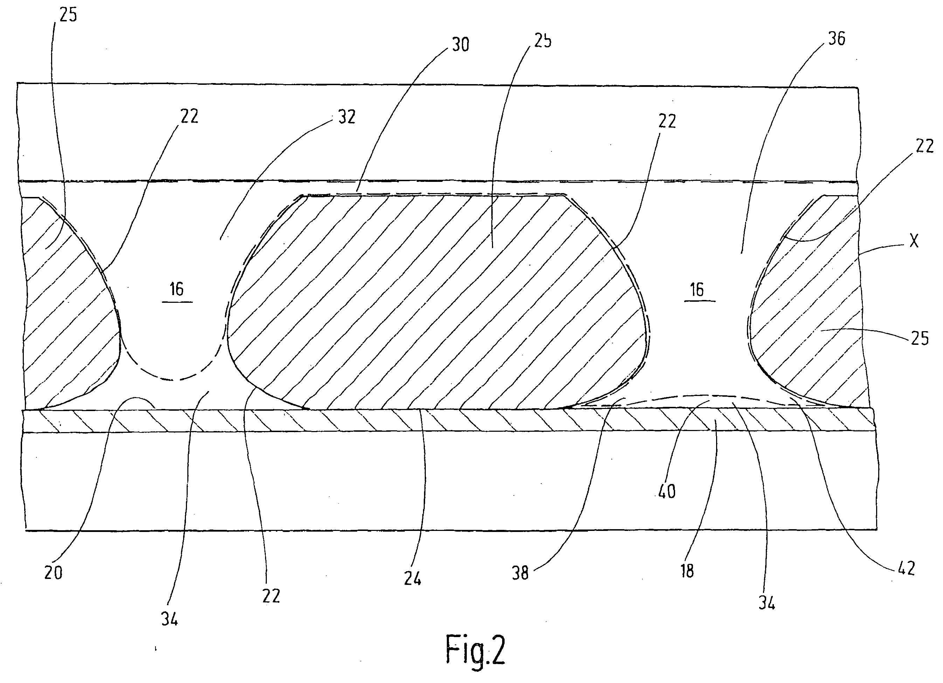

Die Herstellvorrichtung nach der Fig. 1 zeigt deren prinzipiellen Aufbau in horizontaler Fertigungsausrichtung. Zwischen zwei walzenförmigen Führungskörpern 10, von denen mindestens einer antreibbar ist, erstreckt sich ein bandförmiges Formsieb 12, das Bestandteil eines als Ganzes mit 14 bezeichneten Formgebungswerkzeuges ist. Das Formsieb 12 weist eine Vielzahl von einzelnen Formkavitäten 16 auf, die vollständig das Formsieb 12 durchgreifen, und die jeweilige Kavität 16 hat von der Seite her gesehen gemäß der in Fig. 2 vergrößert wiedergegebenen Längsschnittdarstellung X nach der Fig. 1 die Form eines Rotationshyperboloids. Andere Kavitätsformen sind hier aber gleichfalls möglich in Abhängigkeit der vorgebbaren Gestalt des herzustellenden Endproduktes.

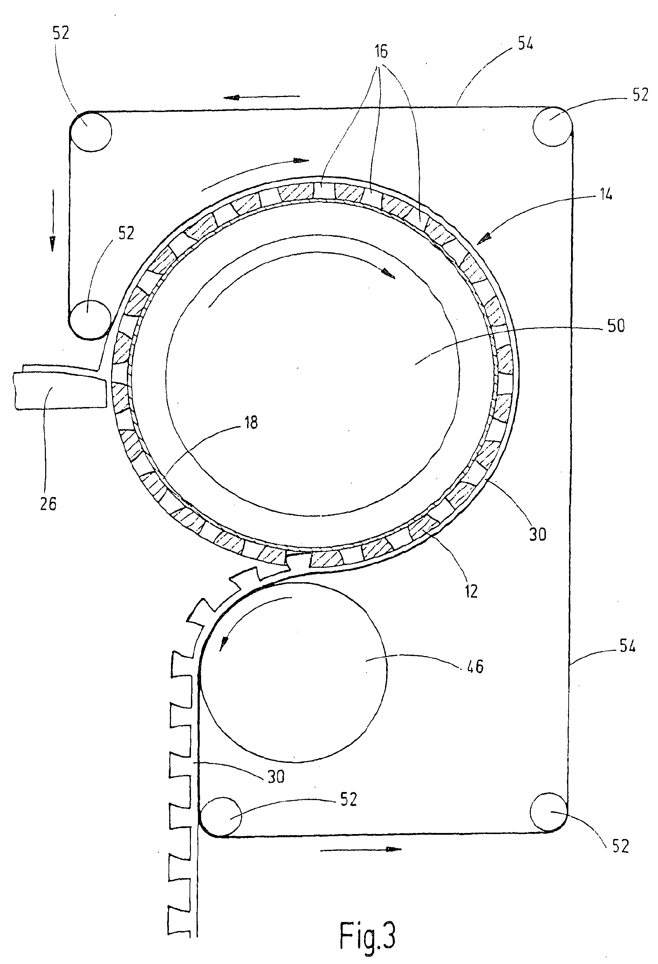

In Blickrichtung auf die Fig. 1 gesehen, verläuft innerhalb des bandartigen Formsiebes 12 ein weiteres Band 18, das geschlossene Oberflächen bildet und insoweit mit keiner Kavität, zumindest in den Bereichen, in denen das Band 18 die Kavitäten 16 des bandartigen Formsiebes 12 abdeckt, versehen ist. Die dem Formsieb 12 zugewandte Seite 20 des weiteren Bandes 18 bildet insoweit eine Gegenfläche aus, die zusammen mit den Begrenzungswänden 22 (s. Fig. 3) der einzelnen Formkavitäten 16 die jeweilige Formgebungszone des Formsiebes 12 begrenzt.

Die in der Art von Obertrum und Untertrum unterteilten Bänder 12 und 18 weisen in die Zeichenebene hineinragend eine vorgebbare Breite (nicht dargestellt) auf, und die in der Fig. 1 in nur einer Ebene gezeigten Kavitäten 16 erstrecken sich ebenso in die Zeichenebene über eine vorgebbare Wegstrecke hinein. Das insoweit ausgebildete Siebband 12 kann jeweils mehrere Hundert, Tausend oder Zehntausend und mehr durchgehende Öffnungen auf einem cm² Bandmaterialfläche aufweisen. Des besseren Verständnisses wegen sind aber in der Darstellung nach der Fig. 1 die dahingehenden Größenverhältnisse nicht berücksichtigt.

Die Antriebsrichtung der Führungskörper 10 ist in der Fig. 1 mit Pfeilen wiedergegeben, so dass bei der gewählten Antriebsrichtung sich die beiden Bänder 12 und 18 in Blickrichtung auf die Fig. 1 gesehen bezogen auf die Obertrumlage beider Bänder 12, 18 von links nach rechts bewegen, und zwar beide Bänder mit derselben axialen Verfahrgeschwindigkeit. Jedoch sind die beiden Bänder 12 und 18 eigenständige Bauteile und voneinander bis auf die gemeinsame Anlage miteinander völlig separiert, so dass die bereits angesprochene Gegenfläche 20 des weiteren Bandes 18 mit der dem weiteren Band 18 zugewandten Anlagefläche 24 des Formsiebes 12 Umgebungsluft einschließt, wobei die derart eingeschlossene Umgebungsluft zwar in die einzelnen Kavitäten 16 eintreten kann, dass aber die vorgebbare Luftmenge, die sich in der jeweiligen Formgebungszone befindet, durch die Abdichtung im Bereich der Siebteile 25 des Formsiebes 12 einen Gegendruck erfährt, so dass die in der Kavität 16 eingeschlossene Luft nicht ohne Weiteres nach außen während des Formgebungsprozesses in die Umgebung verdrängt werden kann.

Soweit die Herstellvorrichtung nach der Fig. 1 im Rahmen eines abgeschlossenen Systems (nicht dargestellt) betrieben wird, besteht grundsätzlich auch die Möglichkeit, die Herstellvorrichtung innerhalb eines Medienraums zu betreiben, in den beispielsweise Stickstoff anstelle von Umgebungsluft eingebracht werden kann. Auch sind hier andere Arbeitsgase vom Einsatz her grundsätzlich möglich wie Argon, Helium etc., so dass sich gegebenenfalls mit den dahingehenden Edelgasen eine Oberflächenmodifizierung für das mit der Vorrichtung zu erstellende Verschluss- oder Haftprodukt vornehmen lässt.

Des Weiteren weist die Vorrichtung nach der Fig. 1 eine Auftrageinrichtung 26, beispielsweise in der Art einer üblich ausgestalteten Extruderdüse auf, die an ihrer Unterseite mit Einzeldüsen (nicht dargestellt) versehen den Extrusionsauftrag eines extrudierbaren Kunststoffmaterials in die Formkavitäten 16 vornimmt. Das Eindringen des Kunststoffmaterials in die Formkavitäten 16 des Formsiebes 12 kann durch Eindrückwalzen 28 unterstützt werden, die auf gegenüberliegenden Seiten der Bänder 12, 18 angeordnet sind, wobei die dahingehende Anordnung nur exemplarisch dargestellt ist, um deren Funktion zu verdeutlichen. In Wirklichkeit ist sowohl die Auftrageinrichtung 26 als auch die jeweilige Eindrückwalze 28, denen auch eine Stütz- und Führungsfunktion zukommt, wesentlich komplizierter aufgebaut als vorliegend dargestellt.

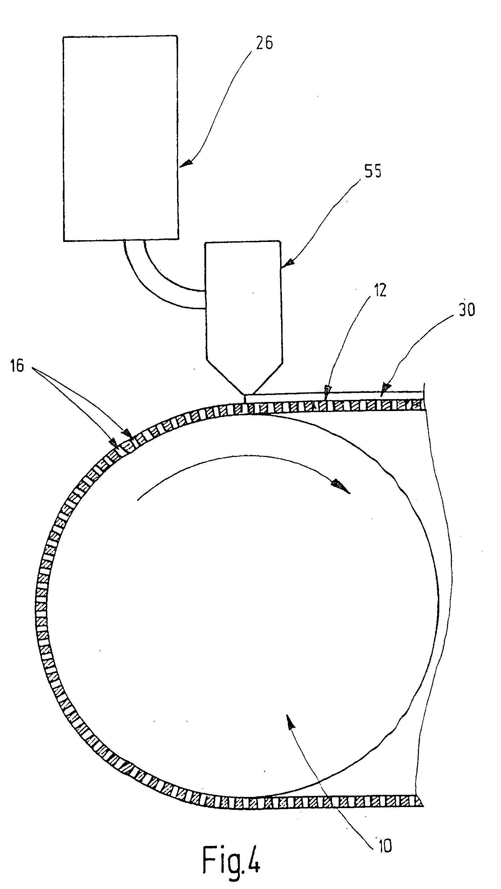

Wie der vergrößerte Bildausschnitt X nach der Fig. 2 ergibt, wird mit der Ausgestaltung des bandartigen Trägers 30 das Kunststoffmaterial in der Art eines Domes 32 (strichliniert dargestellt) in die zugeordnete Formkavität 16 verdrängt, wobei die verbleibende Luftmenge 34 in der Formgebungszone sich zusehends verkleinert, so dass auf die Stirnseite des Doms 32 ein Gegendruck ausgeübt wird. Dieser Gegendruck baut sich auch deshalb auf, weil die eingeschlossene Luftmenge 34 aufgrund der angesprochenen Abdichtung zwischen Anlagefläche 24 des Siebbandes 12 und der zugewandten Seite oder Gegenfläche 20 des weiteren Bandes 18 nicht in die Umgebung verdrängt werden kann. Mit Weitereintreten des Kunststoffmaterials in die Formkavität 16 entsteht dann neben einem Stielteil 36 ein sich an dessen Ende verbreiterndes Kopfteil 38 (siehe auch Fig. 4), wobei die nicht verdrängte Luftmenge 34 dann am freien stirnseitigen Ende des Kopfteiles 38 in dieses eine konkave Vertiefung 40 einbringen kann (in Fig. 3 strichliniert dargestellt). Der Prozess der Luftverdrängung kann aber auch so gesteuert werden, dass durch vollständige Verdrängung der Luftmenge 34 plane Kopfoberseiten ohne konkave Vertiefung entstehen. Der angesprochene Fertigungsprozess geht kontinuierlich vonstatten, indem über die Extrusionseinrichtung 26 permanent Kunststoffmaterial in die sich nach rechts bewegenden, zunächst leeren Kavitäten 16 eingefüllt wird.

Wie Fig. 2 des Weiteren zeigt, ist das randseitige Flankenende 42 des Kopfteiles 38 entsprechend im Querschnitt gesehen nach außen hin zur Umgebung verjüngt, so dass das Flankenende 42 am randseitigen Ende des Kopfteils 38 entsprechend flexibel und nachgiebig ausgebildet ist; dennoch aber die für eine sichere Verhakung oder Anhaftung notwendige Steifigkeit in der späteren Verwendung aufbringt. Hierzu trägt auch mit bei, dass mit durch den Gegendruck verdränger Luftmenge es zu einer verstärkten Orientierungsausrichtung im Bereich des Flankenendes 42 des Kopfteiles 38 kommt, in dem die verdrängte Luft mit ihrer allseitigen Strömungsrichtung dem Kunststoffmaterial im Bereich des jeweiligen Stielteiles 36 in axialer Richtung gesehen eine Längsorientierung und dem jeweiligen Kopfteil 38 in radialer Richtung gesehen eine gleichmäßige Querorientierung gibt. Durch die angesprochene makromolekulare Ausrichtung des Kunststoffmaterials durch den Gegendruck lässt sich das Verschluss- oder Haftprodukt 44 auch von der Trägerseite 30 her entsprechend dünn ausbilden, so dass das Endprodukt 44 gemäß der Darstellung nach der Fig. 4 nicht nur weicher und flexibler ist als bisher vergleichbare Produkte, sondern im Hinblick auf die mögliche Reduzierung der freien Materialquerschnitte lässt sich eine schnellere Abkühlung des Kunststoffmaterials innerhalb des Formsiebes 12 erreichen, so dass es schneller zu einer Aushärtung des Kunststoffmaterials in der jeweiligen Kavität 16 kommt mit der Folge, dass das Ausformen rascher vonstattengeht als bei bisherigen Verfahrenslösungen, mit der Folge eines schnelleren Betriebs des Formgebungswerkzeuges 14 als Ganzes. Die angesprochenen Bänder 12 und 18 sind vorzugsweise aus Metallmaterialien gebildet; es sind hier aber auch andere Materialpaarungen denkbar; insbesondere könnte das weitere Band 18 auch aus einem Kunststoffmaterial mit besonders guter Abdichtwirkung bestehen. Auch kann das Band 18 eine Beschichtung zur Verbesserung der Abdichtwirkung aufweisen oder als mehrlagige Struktur ausgebildet sein, beispielsweise in Form einer gut abdichtenden ersten Lage und einer stabilisierenden zweiten Lage, die aus einem anderen Werkstoff als die erste Lage gebildet ist. Wie weiter die Fig. 1 zeigt, lässt sich dann das fertige Verschluss- oder Haftprodukt 44 über eine Ausziehwalze 46 aus der Formvorrichtung für spätere Anwendungen entfernen. Im Bereich der dahingehenden Ausformzone kann noch eine Heiz- und/oder Kühlvorrichtung 48 angeordnet sein, mit der sich der Aushärtvorgang weiter optimieren lässt.

Um eine besonders gute Abdichtwirkung im Bereich der Anlage der Gegenfläche 20 des Abdeckbandes 18 mit der Anlagefläche 24 des Formsiebes 12 zu erreichen, ist vorgesehen, dass zumindest eine der beiden Oberflächen mit einer Rauigkeit Rz von 0,02 bis 2,5 µm, vorzugsweise im Bereich von 1,3 µm versehen wird.

Das erfindungsgemäße Verfahren zum Herstellen eines Verschluss- oder Haftendproduktes gemäß der Darstellung nach der Fig. 4 kann grundsätzlich mit jedem thermoplastischen Kunststoff ausgeführt werden, wobei je nach Verwendungszweck vorzugsweise Polypropylen, Polyamid oder Polyethylen verwendet wird. Auch Co- bzw. Terpolymere, die einen oder mehrere der genannten thermoplastischen Kunststoffe enthalten, sind gut geeignet.

Ist die spätere Verwendung des Endproduktes für Anhaftvorgänge insbesondere mit Drittbauteilen vorgesehen, kommt insbesondere als Kunststoffmaterial Polyvinylsiloxan zum Einsatz oder ein sonstiger Kunststoff mit entsprechend thixotropem Verhalten, wobei bei diesen Kunststoffmaterialien die mit einem Rotationsviskosimeter gemessene Viskosität zwischen 7.000 bis 15.000 mPas liegen sollte, vorzugsweise jedoch einen Wert von etwa 10.000 mPas aufweist, bei einer Scherrate von 10 1/s.

Die Fig. 3 zeigt eine gegenüber der Fig. 1 modifizierte Herstellvorrichtung mit im Wesentlichen vertikal verlaufender Herstellrichtung. Sofern die für die Fig. 3 eingesetzten Bauteile den Bauteilen nach der Fig. 1 entsprechen, werden diese mit denselben Bezugszeichen auch in der Fig. 3 angegeben. Die insoweit bisher getroffenen Ausführungen gelten dann auch für die Ausführungsform der Herstellvorrichtung nach der Fig. 3.

Ein wesentlicher Unterschied zwischen den beiden Herstellvorrichtungen ist jedoch, dass sowohl das bandartige Formsieb 12 als auch das weitere Band 18 wiederum in geschlossener Weise nunmehr auf einer zylindrischen Formgebungstrommel 50 als Formgebungswerkzeug 14 angeordnet sind. Mittels der extruderartigen Auftrageinrichtung 26 wird wiederum das Kunststoffmaterial zur Bildung des Endproduktes 44 in die Kavitäten 16 der Formvorrichtung eingebracht. Anstelle von den vorstehend beschriebenen Eindrückwalzen 28 wird jedoch im vorliegenden Ausführungsbeispiel der Herstellvorrichtung ein über Umlenkrollen 52 in sich geschlossenes Eindrück- und Anlageband 54 in Pfeilrichtung geführt, um das permanente Einbringen und Halten des Kunststoffmaterials in die jeweilige Form-Kavität 16 zu gewährleisten. Das insoweit einstückig ausgebildete Band 54 bildet mithin eine Art Gegenlager gegenüber dem weiteren Band 18 aus und schließt insoweit die Kavitäten 16 in der anderen Richtung gleichfalls in dichtender Weise gegenüber der Umgebung ab, wobei insbesondere das bandartige Trägerteil 30 aus Kunststoffmaterial in der Art eines zusätzlichen Dichtmittels die Abdichtung nach außen hin verbessert. Ferner erstreckt sich von der Breite her gesehen das Anlageband 54 wiederum in die Zeichenebene der Fig. 3 hinein über die gesamte Breite des trommelartigen Formgebungswerkzeuges 14 jedenfalls insoweit, dass soweit Kavitäten 16 vorhanden sind, diese auch von dem Anlageband 54 vollständig überdeckt werden.

Die Fig. 4 zeigt eine gegenüber den vorher vorgestellten Herstellvorrichtungen einen insoweit geänderten Aufbau, als die Kavitäten 16 des Formsiebes 12 unmittelbar auf dem zylindrischen Führungskörper 10 angeordnet sind. Die Drehrichtung des Führungskörpers 10 lässt sich in der Fig. 4 aus der Pfeilrichtung ersehen. Mittels der Extruder- oder Auftrageinrichtung 26 wird wiederum das Kunststoffmaterial nunmehr mittels einer Rakeleinrichtung 55 in die Kavitäten 16 des Formsiebes 12 eingebracht. Die benötigte Abdichtung zwischen Formsieb 12 und Führungskörper 10 ist mithin durch die Außenseite des Formkörpers 10 und der Innenseite des Formsiebes 12 im Bereich des Kunststoffauftrages mittels der Rakeleinrichtung 55 realisiert.

In einer weiteren nicht dargestellten Ausführungsform einer Herstellvorrichtung kann auch das Sieb 12 auf den zylindrischen Führungskörper vollumfänglich aufgezogen sein, so dass in konzentrischer Bauweise das dann zylindrische Formsieb 12 den zylindrischen Führungskörper 10 unter Einhalten der benötigten Passmaße für eine Abdichtung umschließt.

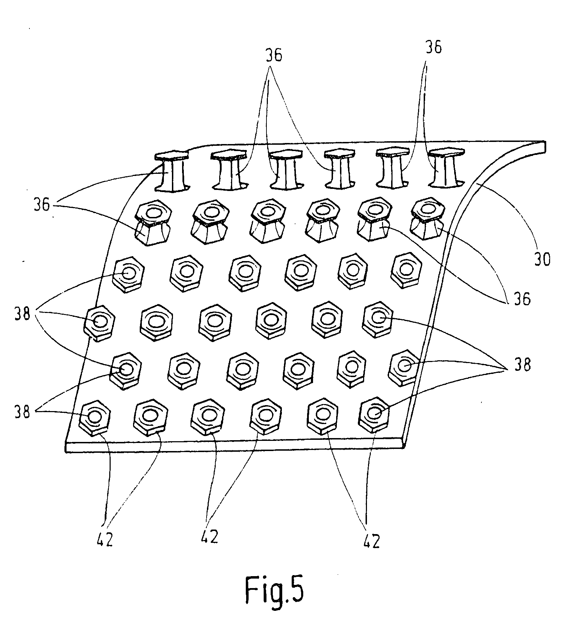

Die Fig. 5 zeigt nun wiederum das fertige Endprodukt, das mit den Herstellvorrichtungen nach den Figuren 1 bis 4 herstellbar ist. Das Endprodukt ist dadurch gekennzeichnet, dass seine Höhe zwischen der Unterseite des Trägers 30 und der Oberseite des Trägers 30 derart gering ist, vorzugsweise 40 bis 120 µm, besonders bevorzugt 70 bis 110 µm, beträgt, dass zumindest in Teilbereichen, insbesondere in Längsausrichtung des Trägers 30 das Produkt elastische Eigenschaften aufweist.

Wird ein üblicher thermoplastischer Kunststoff eingesetzt wie Polypropylen, Polyamid, Polymethylen etc., sind die Flankenenden 42 des jeweiligen Kopfteils 38 entsprechend steif ausgebildet aufgrund der vorstehend beschriebenen verbesserten Orientierung des Kunststoffmaterials durch Lufteinschluss in der jeweiligen Kavität 16, so dass die Unterseite des jeweiligen Flankenendes 42 eine sichere Verhakungsmöglichkeit bietet für den Untergriff eines nicht näher dargestellten Schlaufenmaterials eines weiteren Haftverschlussteiles zur Bildung des Kletten^{®}-Haftverschlusses. Auch können Verschlussteile, wie in der Fig. 4 dargestellt, mit denselben Verschlussteilen (nicht dargestellt) eines weiteren Haftverschlussteiles zusammenwirken, um dergestalt gleichfalls einen immer wieder geöffneten oder geschlossenen Haftverschluss zu bilden, der auf beiden Seiten als Verhakungsmittel dann pilzartige Kopfteile 38 aufweist.

Die in Fig. 5 gezeigten Stilteile 36 sowie die Kopfteile 38 sind in Mehreckform, insbesondere jeweils in Sechseckform ausgebildet. In Abhängigkeit der Formgeometrie für das jeweilige Formsieb 12 lassen sich aber auch zylindrische Stielteile (nicht dargestellt) oder sonstige Stielteilformen erreichen.

Wird als Kunststoffmaterial bevorzugt Polyvinylsiloxan eingesetzt oder ein sonstiges Kunststoffmaterial mit der angegebenen Thixotropie, wird aus einem Verschlussprodukt jedoch ein Haftprodukt, bei dem die freien Stirnseiten der Kopfteile 38 an sonstigen Oberflächen, insbesondere von Drittbauteilen, unter Einwirkung von Van-der-Waals-Kräften anhaften können. Das erfindungsgemäße Verfahren sowie seine Herstellvorrichtungen lassen sich also dergestalt anpassen, dass einmal das beschriebene Verschlussprodukt zu erhalten ist und einmal das genannte Haftprodukt.

## Patentansprüche

1. Verfahren zum Herstellen eines Kunststofferzeugnisses bestehend aus einem Träger (30) mit vorstehenden Stielteilen (36), die an ihrem freien Ende ein sich gegenüber dem jeweiligen Stielteil (36) im Durchmesser verbreiterndes Kopfteil (38) aufweisen, wobei die Stielteile (36) und die Kopfteile (38) in Kavitäten (16) eines Formsiebes (12) und auf ihren dem Träger (30) abgewandten Seiten in einer Formgebungszone des Formsiebes (12) gebildet werden, wobei die Formgebungszone mittels einer Gegenfläche (20) gegenüber der Umgebung derart abgedichtet wird, dass eine vorgegebene Luftmenge in der Formgebungszone eingeschlossen einen Gegendruck auf das in die jeweilige Kavität (16) der Formgebungszone eingebrachte Kunststoffmaterial zur Unterstützung der Formgebung ausübt, und wobei die Abdichtung der Formgebungszone mittels der Oberflächengestaltung der einander zugewandten Oberflächen von Formsieb (12) und/oder Gegenfläche (20) erreicht wird, **dadurch gekennzeichnet, dass** zumindest eine der beiden Oberflächen mit einer Rauigkeit Rz von 0,02 bis 2,5 µm versehen wird.

2. Verfahren nach Anspruch 1, **dadurch gekennzeichnet, dass** zumindest eine der beiden Oberflächen mit einer Rauigkeit Rz von 1,3 µm versehen wird.

3. Verfahren nach einem der vorhergehenden Ansprüche, **dadurch gekennzeichnet, dass** die durch die jeweiligen Kavitäten (16) gebildete Formgebungszone Siebteile (25) im Formsieb (12) aufweist, die mit der Gegenfläche (20) eines Bandes (18) während des Formvorganges zur Abdichtung in Anlage miteinander gebracht werden.

4. Verfahren nach einem der vorhergehenden Ansprüche, **dadurch gekennzeichnet, dass** die Gegenfläche (20) und das Formsieb (12) aus walzenartigen und/oder aus bandförmigen Vorrichtungsteilen (12; 18) bestehen, von denen zumindest ein Vorrichtungsteil (12; 18) für einen fortlaufenden Umlauf angetrieben wird.

5. Verfahren nach einem der vorhergehenden Ansprüche, **dadurch gekennzeichnet, dass** die jeweilige Kavität (16) innerhalb des Formsiebes (12) in der Art eines Rotationshyperboloiden ausgebildet wird.

6. Verfahren nach einem der vorhergehenden Ansprüche, **dadurch gekennzeichnet, dass** als Kunststoffmaterial thermoplastische Kunststoffe oder Kunststoffe mit hohen Thixotropiewerten verwendet werden.

7. Vorrichtung zum Durchführen des Verfahrens nach einem der vorhergehenden Ansprüche, wobei eine Formgebungszone eines Formsiebes (12) mittels einer Gegenfläche (20) gegenüber der Umgebung derart abdichtbar ist, dass eine vorgegebene Luftmenge in der Formgebungszone eingeschlossen einen Gegendruck auf das in eine jeweilige Kavität (16) der Formgebungszone eingebrachte Kunststoffmaterial zur Unterstützung der Formgebung ausübt, und wobei die Abdichtung der Formgebungszone mittels der Oberflächengestaltung der einander zugewandten Oberflächen von Formsieb (12) und/oder Gegenfläche (20) erreicht ist, **dadurch gekennzeichnet, dass** zumindest eine der beiden Oberflächen mit Rauigkeit Rz von 0,02 bis 1 µm versehen ist.

8. Vorrichtung nach Anspruch 7, **dadurch gekennzeichnet, dass** zumindest eine der beiden Oberflächen mit Rauigkeit Rz von 0,1 µm versehen ist.

## Claims

1. A method for producing a plastic product consisting of a support (30) with projecting stem parts (36) that have on their free end a head part (38) with a diameter that widens with respect to the respective stem part (36), the stem parts (36) and the head parts (38) being formed in cavities (16) of a moulding screen (12) and on their sides facing away from the support (30) in a shaping zone of the moulding screen (12), the shaping zone being sealed off from the environment by means of a counter-face (20) such that a pre-determined quantity of air enclosed in the shaping zone exerts a counter-pressure on the plastic material introduced into the respective cavity (16) of the shaping zone in order to support the shaping process, and the sealing of the shaping zone being achieved by means of the surface configuration of the surfaces of the moulding screen (12) and/or counter-face (20) that face one another, **characterised in that** at least one of the two surfaces is provided with a roughness Rz of 0.02 to 2.5 µm.

2. The method according to Claim 1, **characterised in that** at least one of the two surfaces is provided with a roughness Rz of 1.3 µm.

3. The method according to any of the preceding claims, **characterised in that** the shaping zone formed by the respective cavities (16) has screen parts (25) in the moulding screen (12) which can be brought into contact with one another with the counter-face (20) of a band (18) during the shaping process in order to form a seal.

4. The method according to any of the preceding claims, **characterised in that** the counter-face (20) and the moulding screen (12) are made of roller-like and/or band-shaped device components (12; 18) of which at least one device component (12; 18) is driven for continuous circulation.

5. The method according to any of the preceding claims, **characterised in that** the respective cavity (16) within the moulding screen (12) is formed in the manner of a hyperboloid of revolution.

6. The method according to any of the preceding clams, **characterised in that** thermoplastics or plastics that have high thixotropic values are used as a plastic material.

7. A device for carrying out the method according to any of the preceding claims, a shaping zone of a moulding screen (12) being able to be sealed off from the environment by means of a counter-face (20) in such a way that a pre-determined quantity of air enclosed in the shaping zone exerts a counter-pressure on the plastic material introduced into a respective cavity (16) of the shaping zone in order to support the shaping process, and sealing of the shaping zone being achieved by means of the surface configuration of the facing surfaces of the moulding screen (12) and/or the counter-face (20), **characterised in that** at least one of the two surfaces is provided with roughness Rz of 0.02 to 1 µm.

8. The device according to Claim 7, **characterised in that** at least one of the two surfaces is provided with roughness Rz of 0.1 µm.

## Revendications

1. Procédé de fabrication d'un produit en matière plastique, constitué d'un support (3) ayant des parties (36) formant tiges en saillie, qui ont, à leur extrémité libre, une partie (38) formant tête s'élargissant en diamètre par rapport à la partie (36) respective formant tige, les parties (36) formant tiges et les parties (38) formant têtes étant formées dans des cavités (16) d'un crible (12) de moulage et sur leur côté éloigné (30) du support, dans une zone de façonnage du crible (12) de moulage, la zone de façonnage étant rendue étanche par rapport à ce qui l'entoure au moyen d'une surface (20) antagoniste, de manière à ce qu'une quantité d'air donnée à l'avance enfermée dans la zone de façonnage exerce, pour assister le façonnage, une pression antagoniste sur la matière plastique introduite dans la cavité (16) respective de la zone de façonnage, et dans lequel on obtient l'étanchéité de la zone de façonnage au moyen d'une conformation des surfaces tournées l'une vers l'autre du crible (13) de moulage et/ou de la surface (20) antagoniste, **caractérisé en ce qu'**au moins l'une des deux surfaces a une rugosité Rz de 0,02 à 2,5 µm.

2. Procédé suivant la revendication 1, **caractérisé en ce qu'**au moins l'une des deux surfaces a une rugosité Rz de 1,3 µm.

3. Procédé suivant l'une des revendications précédentes, **caractérisé en ce que** la zone de façonnage formée par les cavités (16) respectives a des parties (15) de crible dans le crible (12) de moulage, qui, pour l'étanchéité, sont mises en contact avec la surface (20) antagoniste d'un tapis (18) pendant l'opération de moulage.

4. Procédé suivant l'une des revendications précédentes, **caractérisé en ce que** la surface (20) antagoniste et le crible (12) de moulage sont constitués de parties (12; 18) de dispositif de type en cylindre et/ou en forme de bande, parmi lesquelles au moins une partie (12; 18) du dispositif est entraînée pour une circulation continue.

5. Procédé suivant l'une des revendications précédentes, **caractérisé en ce qu'**on forme la cavité (16) respective dans le crible (12) de moulage à la manière d'un hyperboloïde de révolution.

6. Procédé suivant l'une des revendications précédentes, **caractérisé en ce qu'**on utilise comme matière plastique des matières plastiques thermoplastiques ou des matières plastiques ayant de grandes valeurs de la thixotropie.

7. Dispositif pour effectuer le procédé suivant l'une des revendications précédentes, une zone de façonnage d'un crible (12) de moulage étant rendue étanche vis-à-vis de ce qui l'entoure au moyen d'une surface (20) antagoniste, de manière à ce qu'une quantité d'air donnée à l'avance enfermée dans la zone de façonnage exerce pour assister le façonnage une pression antagoniste sur la matière plastique introduite dans une cavité (16) respective de la zone de façonnage et l'étanchéité de la zone de façonnage étant obtenue au moyen de la conformation des surfaces tournées l'une vers l'autre du crible (12) de moulage et/ou de la surface (20) antagoniste, **caractérisé en ce qu'**au moins l'une des deux surfaces a une rugosité Rz de 0,02 à 1 µm.

8. Dispositif suivant la revendication 7, **caractérisé en ce qu'**au moins l'une des deux surfaces à une rugosité Rz de 0,1 µm.
